# EUROPÄISCHE PATENTSCHRIFT

(11) **EP 3 998 916 B1**
(45) Veröffentlichungstag und Bekanntmachung des Hinweises auf die Patenterteilung: **23.08.2023**
(21) Anmeldenummer: 20760834.0
(22) Anmeldetag: 20.08.2020
(51) Int. Cl.: A47J 31/44

(54) **MILCHAUFSCHÄUMVORRICHTUNG SOWIE VERFAHREN ZUM ERZEUGEN VON MILCHSCHAUM**
MILK FOAMING DEVICE AND METHOD FOR PRODUCING MILK FOAM
DISPOSITIF DE MOUSSAGE DE LAIT AINSI QUE PROCÉDÉ DE PRODUCTION DE MOUSSE DE LAIT

(30) Priorität: 22.08.2019 EP 19193185
(43) Veröffentlichungstag der Anmeldung: 25.05.2022
(73) Patentinhaber: JURA ELEKTROAPPARATE AG, 4626 Niederbuchsiten (CH)
(72) Erfinder: KLEPZIG, Sandro, 5723 Teufenthal (CH)
(74) Vertreter: Mertzlufft-Paufler, Cornelius
(86) Internationale Anmeldenummer: PCT/EP2020/073439
(87) Internationale Veröffentlichungsnummer: WO 2021/032863

(56) Entgegenhaltungen:
- EP-A1- 2 695 558
- EP-A1- 2 732 740
- WO-A1-03/043472
- DE-A1-102011 102 734

## Beschreibung

Die Erfindung betrifft eine Milchaufschäumvorrichtung, mit einer Dampfdüse und einer sich an die Dampfdüse anschließenden Mischkammer zum Herstellen von Milchschaum aus Dampf, Milch und Luft, wobei ein in die Mischkammer gelangender Milchstrom mittels eines veränderbaren Öffnungsquerschnitts einstellbar ist.

Die Erfindung betrifft ferner ein Verfahren zum Erzeugen von Milchschaum mit Hilfe einer Milchaufschäumvorrichtung, wobei Luft und Milch in einer Mischkammer mittels eines Dampfstroms zu dem Milchschaum aufgeschäumt werden und wobei ein in die Mischkammer gelangender Milchstrom mittels eines veränderbaren Öffnungsquerschnitts eingestellt wird.

Derartige Vorrichtungen und Verfahren sind bereits bekannt und werden insbesondere in Kaffeevollautomaten eingesetzt, um vollautomatisch Milchschaum für Kaffee-Getränke herzustellen. Dabei soll typischerweise der Milchschaum möglichst feinporig sein.

Oftmals kann der Benutzer des Kaffeevollautomaten zudem auch die Temperatur des Milchschaums einstellen, indem er den besagten Milchstrom, aus welchem durch Vermischen mit Luft der Milchschaum hergestellt wird, einstellt, sodass im Verhältnis zu einer aufzuschäumenden Menge Milch mehr oder weniger heißer Dampf pro Zeiteinheit zur Erwärmung des Milchschaums zur Verfügung steht. Dabei erhöht sich typischerweise die Temperatur des Milchschaumes, je geringer der Milchstrom eingestellt wird, d.h. je stärker der Milchstrom gedrosselt wird.

Mit diesem Ansatz lässt sich die Temperatur des Milchschaums allerdings nicht beliebig steigern. Denn typischerweise ist zu beobachten, dass die Feinporigkeit des Milchschaums mit zunehmender Temperatur, d.h. bei abnehmender Flussrate des Milchstroms, abnimmt, was unerwünscht ist. Daher kann die Feinporigkeit des Milchschaums typischerweise nur bis zu Temperaturen von 40-50°C aufrechterhalten werden.

Zudem ist ein häufiges Problem, dass der Milchstrom bei zu geringer Flussrate (d.h. zu geringem Milchstrom) zu pulsieren beginnt, oder ganz abreißt, was dann in einem unerwünschten Stocken beziehungsweise ungleichmäßigem Ausfließen des Milchschaums resultiert.

Aus EP 2 695 558 A1 ist ein Kaffeevollautomat mit einer Milchschäumeinrichtung bekannt, bei welchem ein Luftstrom und ein Milchstrom mit Hilfe eines T-Stücks vereinigt und anschließend durch ein Drosselventil geführt werden, welches mit Hilfe einer Stelleinrichtung von außen bedienbar ist.

Aus WO 03/043472 A1 ist eine weitere Vorrichtung zum Erzeugen von Milchschaum bekannt, bei welcher Milch und Luft entlang eines Regelkörpers fließen, der manuell mit Hilfe eines Hebels verstellt werden kann, um so gleichzeitig zwei variable Öffnungsquerschnitte, durch die jeweils die Milch bzw. die Luft strömt, einzustellen.

DE 10 2011 102734 A1 offenbart eine Vorrichtung zum Aufschäumen von Milch, die je nach Ausgestaltung mehrere Ventile und Pumpen umfasst, die mittels eines Mikroprozessors angesteuert werden kann, um verschiedene Prozessparameter einzustellen. Hierbei wird die Milch mit der Luft an einer Vereinigungsstelle zusammengeführt, die stromabwärts liegt zu einem jeweiligen variablen Öffnungsquerschnitt, mit dem der Milchstrom bzw. der Luftstrom geregelt wird.

EP 2 732 740 A1 offenbart eine Vorrichtung zum Emulgieren einer Mischung aus Luft, Dampf und Milch, wobei mit einem rotierbaren Ventilelement ein Spülfluid durch einen Milchzuführkanal in eine Luftkammer geleitet werden kann, um so die Reinigung der Luftkammer zu ermöglichen.

Ausgehend von diesen Beobachtungen liegt der Erfindung die Aufgabe zugrunde, bisher im Stand der Technik vorbekannte Milchaufschäumvorrichtungen hinsichtlich der Qualität des ausgegebenen Milchschaums zu verbessern und die vorgenannten Nachteile zu vermeiden. Hierbei besteht ein weiteres Ziel darin, eine Feinporigkeit des Milchschaums auch bei einer hohen Temperatur des Milchschaums zu gewährleisten.

Zur Lösung dieser Aufgabe sind erfindungsgemäß bei einer Milchaufschäumvorrichtung die Merkmale von Anspruch 1 vorgesehen. Insbesondere wird somit erfindungsgemäß zur Lösung der Aufgabe bei einer Milchaufschäumvorrichtung der eingangs genannten Art vorgeschlagen, dass die Luft als ein Luftstrom durch den veränderbaren Öffnungsquerschnitt in die Mischkammer geführt ist.

Der veränderbare Öffnungsquerschnitt kann dabei als eine Drossel wirken, mit der beispielsweise eine Flussrate sowohl des Milchstroms (wie bislang üblich) aber auch eine Flussrate des Luftstroms regelbar ist. Anders als bei bislang bekannten Milchaufschäumvorrichtungen ist der Luftstrom somit nicht länger unabhängig von dem Milchstrom, sondern eine Flussrate des Luftstroms ist abhängig von einer Flussrate des Milchstroms. Dabei reduziert sich der Luftstrom automatisch, sobald der Milchstrom durch Verringerung des veränderbaren Öffnungsquerschnitts reduziert wird. Dadurch kann gewährleistet werden, dass der Luftstrom nicht (wie bei vorbekannten Milchaufschäumvorrichtungen) die Oberhand gewinnt und der Milchstrom auf Kosten des Luftstroms abrupt abnimmt oder gar ganz abreißt, weil das Luftbeimischungsverhältnis zu groß geworden ist. Entsprechend kann ein Pulsieren oder ungleichmäßiges Ausfließen des Milchschaums aus der Milchaufschäumvorrichtung vermieden werden. Somit kann erreicht werden, dass der Luftstrom noch vor der Drossel dem Milchstrom beigemischt wird.

Die erfindungsgemäße Lösung hat den Vorteil, eine besonders einfache Ausgestaltung vorzuschlagen, mit der der Luftstrom - ohne zusätzliche aktive Regelkomponenten wie steuerbare Ventile oder dergleichen - automatisch anpassbar ist, sobald der Milchstrom mit Hilfe des veränderbaren Öffnungsquerschnitts verändert wird. Genauer kann mit der erfindungsgemäßen Vorrichtung der Luftstrom automatisch reduziert werden, sobald der Milchstrom reduziert wird. Ursächlich hierfür könnte sein, dass die Luft mit der Milch eine gemeinsame fluidische Grenzfläche ausbildet, wenn die Luft zusammen mit der Milch durch den veränderbaren Öffnungsquerschnitt strömt. Dadurch kann in Strömungssituationen, wie sie für die Herstellung von Milchschaum benötigt werden, verhindert werden, dass der Milchstrom ganz abreißt. Bei bisherigen Lösungen, die getrennte Kanäle für Luft und Milch vorsehen, die erst kurz vor oder in der Mischkammer zusammengeführt sind, ist es hingegen durchaus möglich, dass der Milchstrom ganz abreißt, weil der Luftstrom die Oberhand gewinnt und die gesamte Mischkammer flutet.

Im Ergebnis kann mit der erfindungsgemäßen Lösung also selbst dann, wenn der Milchstrom sehr gering eingestellt wird (beispielsweise um eine entsprechend hohe Milchschaumtemperatur zu erzielen) durch eine entsprechend starke Verringerung des Öffnungsquerschnitts gewährleistet werden, dass der Luftstrom ausreichend stark gedrosselt wird. Dadurch kann auch noch bei Temperaturen oberhalb von 50°C feinporiger Milchschaum mit der erfindungsgemäßen Milchaufschäumvorrichtung hergestellt werden. Wird der Milchstrom minimiert, sind Milchschaumtemperaturen von 75°C erzielbar, wobei sich auch bei diesen hohen Temperaturen feinporiger, cremiger Milchschaum gewinnen lässt.

Ein weiterer Vorteil der erfindungsgemäßen Milchaufschäumvorrichtung besteht darin, dass zu Beginn eines Bezugs von Milchschaum aus der Milchaufschäumvorrichtung, also dann, wenn die Flussrate des Milchstroms von Null allmählich gesteigert wird, ein sanfter Austritt von Milchschaum erreichbar ist. Ein abrupter, teilweise explosionsartiger, Austritt, wie dies bei vorbekannten Milchaufschäumvorrichtungen oftmals zu beobachten ist, ist vermeidbar oder zumindest stark unterdrückbar. Mit anderen Worten kann die erfindungsgemäße Milchaufschäumvorrichtung erreichen, dass Milchschaum auch bei sehr geringer Förderrate gleichmäßig, das heißt mit gleichbleibender Förderrate, aus der Milchaufschäumvorrichtung fließt.

Die Aufgabe kann auch durch weitere vorteilhafte Ausführungen gemäß den Unteransprüchen gelöst werden.

Somit können also der Luftstrom und der Milchstrom den Milch-und-Luft-Strom ausbilden. Hierzu kann der Luftstrom noch vor dem veränderbaren Öffnungsquerschnitt mit dem Milchstrom vereinigt werden, etwa an einer Mündungsstelle, an welcher die Luftzuführung in die Milchzuführung mündet.

Ferner kann im Bereich des veränderbaren Öffnungsquerschnitts der Luftstrom den Milchstrom zumindest teilweise begrenzen. Mit anderen Worten kann der Luftstrom mit dem Milchstrom eine gemeinsame fluidische Grenzfläche ausbilden im Bereich des veränderbaren Öffnungsquerschnitts. Über diese Grenzfläche kann der Luftstrom fluidische Reibungskräfte auf den Milchstrom übertragen, sodass eine fluidische Kopplung zwischen dem Milchstrom und dem Luftstrom erzielt wird. Aufgrund der Kopplung bewirkt eine Zunahme/Abnahme des Luftstroms eine Zunahme/Abnahme des Milchstroms und umgekehrt. Der veränderbare Öffnungsquerschnitt kann demnach gerade so dimensioniert sein, dass eine Einstellung des veränderbaren Öffnungsquerschnitts sowohl den Milchstrom als auch den Luftstrom, gleichzeitig, einstellt.

Durch eine solche Ausgestaltung kann insbesondere erreicht werden, dass die Luft und die Milch stets gemeinsam, gleichzeitig, durch den veränderbaren Öffnungsquerschnitt fließen können. Dies kann vorzugsweise derart geschehen, dass ein Abreißen und/oder Pulsieren des Milchstroms verhinderbar ist. Demnach kann also der Luftstrom durch Einstellen des veränderbaren Öffnungsquerschnitts synchron und/oder gleichläufig mit dem Milchstrom einstellbar sein. Wie bereits eingangs erwähnt, kann eine solche Einstellung gemäß der Erfindung vorzugsweise unter Verzicht auf eine zusätzliche aktive Regelung des Luftstroms erfolgen. Denn dadurch kann die Milchaufschäumvorrichtung konstruktiv einfach ausgestaltet und somit kostengünstig gefertigt werden. Für eine gleichmäßige Produktion von feinporigem Milchschaum ist es besonders vorteilhaft, wenn der veränderbare Öffnungsquerschnitt einer Beimischöffnung für Luft und Milch, welche in die Mischkammer mündet, (in Strömungsrichtung) vorgelagert ist. Denn dadurch kann bereits eine Durchmischung der Luft mit der Milch noch vor Eintritt in die eigentliche Mischkammer erfolgen, in welcher mit Hilfe von Dampf der eigentliche Aufschäumprozess abläuft. Es kann somit insbesondere der zuvor erwähnte Milch-und-Luft-Strom durch die Beimischöffnung in die Mischkammer geführt sein.

Eine typische Notwendigkeit bei der Benutzung von Milchaufschäumvorrichtungen wie eingangs beschrieben besteht darin, die Milchzuführung regelmäßig zu reinigen, um die Hygiene zu gewährleisten. Grundsätzlich wäre es hierzu bei der hier diskutierten erfinderischen Vorrichtung möglich, die Luftzuführung zu nutzen, um Spülwasser durch die Luftzuführung zu leiten und dadurch die Leitungsabschnitte, die von der Milch und der Luft im Normalbetrieb gemeinsam durchflossen werden, und - zumindest teilweise - auch sich hieran stromaufwärts anschließende Abschnitte der Milchzuführung zu reinigen. Hierbei besteht aber stets die Gefahr, dass das Spülwasser, insbesondere entgegen der normalen Strömungsrichtung der Luft in der Luftzuführung, von der Luftzuführung in die Milchzuführung gedrückt wird. Im schlimmsten Fall kann das Spülwasser so bis zum Milchvorrat gelangen und diesen kontaminieren.

Ausgehend von diesen Überlegungen sieht eine weitere vorteilhafte Ausgestaltung zum Ermöglichen einer sicheren Reinigung der unteren Abschnitte der Milchzuführung vor, dass die besagte Milchzuführung, durch Drehen eines Regelkörpers um eine Regelachse, vollständig verschließbar ist, vorzugsweise derart, dass die Milchzuführung zwischen einem Milchvorrat und dem veränderbaren Öffnungsquerschnitt unterbrochen ist. Das Verschließen der Milchzuführung, durch Verdrehen des Regelkörpers, kann dabei manuell erfolgen oder beispielsweise durch eine entsprechende Automatik, die von dem Kaffeevollautomaten gesteuert wird. Dadurch kann insbesondere eine automatische Reinigung der unteren Abschnitte der Milchzuführung in dem Kaffeevollautomaten realisiert werden.

Hierbei ist es vorzuziehen, wenn die Milchzuführung in einem Abschnitt vollständig verschließbar ist, welcher einer Vereinigungsstelle, an welcher sich der Milchstrom und der Luftstrom vereinigen (um anschließend gemeinsam durch den variablen Öffnungsquerschnitt zu fließen) in Bezug auf eine Strömungsrichtung der Milch vorgelagert ist.

Das Verschließen der Milchzufuhr kann sc ausgestaltet werden (nämlich insbesondere dann, wenn keine zusätzliche Leitung für Spülwasser vorgesehen ist), dass bei vollständigem Verschluss der Milchzuführung, die beschriebene Luftzuführung zum Zuführen von Luft an den veränderbaren Öffnungsquerschnitt noch - zumindest teilweise - geöffnet ist, d.h. mit Spülwasser durchströmbar ist.

Durch derartige Merkmale kann erreicht werden, dass die Luftzuführung weiterhin Luft an den Öffnungsquerschnitt heranführen kann, während die Milchzuführung unterbrochen ist. Wird nun in dieser Situation Spülwasser durch die Luftzuführung geleitet, kann die gesamte Luftzuführung gereinigt werden und dadurch insbesondere diejenigen Leitungsabschnitte, die von der Milch und der Luft im Normalbetrieb gemeinsam durchflossen werden. Somit ist insbesondere ein Abschnitt der Milchzuführung, der sich stromaufwärts des veränderbaren Öffnungsquerschnitts erstreckt, mit dem Spülwasser reinigbar, wobei ein Zurückfließen des Spülwassers in den Milchvorrat wirksam verhindert ist, aufgrund des Verschlusses der Milchzuführung. Mehr noch, das Spülwasser kann sogar gefahrlos in sich stromaufwärts an die besagten Vereinigungsstelle angrenzende Bereiche der Milchzuführung (die im Normalbetrieb nur von Milch, aber nicht von Luft durchflossen werden) bis zum Verschluss eindringen und auch diese Abschnitte reinigen.

Besonders bevorzugt ist es hierbei, dass sich mit dem besagten Regelkörper nicht nur die Milchzuführung verschließen lässt, sondern zudem auch der veränderbare Öffnungsquerschnitt einstellen lässt (wie noch genauer zu erläutern sein wird). Die Qualität des Milchschaums lässt sich weiter steigern, wenn die Milchaufschäumvorrichtung so konstruktiv ausgestaltet ist, dass der Milch-und-Luft-Strom noch vor der besagten Beimischöffnung durch eine Ansaugkammer geführt ist, welche der Mischkammer vorgelagert ist. Hierzu kann der Milch-und-Luft-Strom mittels einer Milch-und-Luft-Zuleitung in die Mischkammer geführt sein. Diese Milch-und-Luft-Zuleitung kann dabei die besagte Ansaugkammer umfassen. In der Ansaugkammer kann eine Vorab-Durchmischung der Milch und der Luft erfolgen. Zudem kann in der Ansaugkammer der Milch-und-Luft-Strom zu einem von der Dampfdüse der Milchaufschäumvorrichtung abgegebenen Dampfstrom ausgerichtet werden, wie noch genauer zu erläutern sein wird.

Aus dem zuvor Gesagten ist ersichtlich, dass es gemäß der Erfindung zu bevorzugen ist, die Milch mit der Luft zu vermischen noch bevor diese in Kontakt mit dem Dampf gerät. Mit anderen Worten kann also in der Milchaufschäumvorrichtung eine Vereinigung der Milch mit der Luft der besagten Dampfdüse vorgelagert sein. Mehr noch, diese Vereinigungsstelle der Milch mit der Luft kann dem besagten variablen Öffnungsquerschnitt (in Bezug auf die Strömungsrichtung der Milch / der Luft) vorgelagert sein.

Die besagte Dampfdüse der Milchaufschäumvorrichtung kann bevorzugt insbesondere so geformt sein, dass ein Dampfstrom erzeugbar ist, der einen Unterdruck auf Basis des Venturi-Effekts verursacht. Mit Hilfe dieses Unterdrucks kann der Milch-und-Luft-Strom, vorzugsweise ohne Unterstützung durch eine zusätzliche Pumpe, in die Mischkammer gefördert werden beziehungsweise förderbar sein. Dadurch kann die gesamte Milchaufschäumvorrichtung kostengünstig ohne eine separate Fördervorrichtung (wie etwa eine zusätzliche Pumpe) ausgestaltet werden.

Die Milchaufschäumvorrichtung kann ferner einen zusätzlichen Durchflussverminderer zum Begrenzen des Luftstroms aufweisen. Dies ist insbesondere dann sinnvoll, wenn der Luftstrom aus der Umgebungsluft bezogen wird.

Der Durchflussverminderer kann sehr einfach in Form einer Lochblende, beispielsweise mit einem Öffnungs-Durchmesser von < 0.5 mm, realisiert sein. Hierbei ist es bevorzugt, wenn zusätzlich oder alternativ zum Durchflussverminderer eine Lippendichtung zur Verhinderung eines Milchrückflusses vorgesehen ist. Diese kann idealerweise dem Durchflussverminderer in Luftstromrichtung nachgelagert sein, um zu verhindern, dass Milch durch den Durchflussverminderer fließt.

In allen vorherigen Ausgestaltungen ist es grundsätzlich zu bevorzugen, wenn der Öffnungsquerschnitt zumindest stufenweise, bevorzugt jedoch kontinuierlich veränderbar ist. Denn in diesem Fall ist ein Durchfluss des Milch-und-Luft-Stroms durch den veränderbaren Öffnungsquerschnitt zumindest stufenweise, bevorzugt jedoch kontinuierlich, einstellbar. Dadurch lässt sich die Temperatur des Milchschaums je nach persönlichen Bedürfnissen individuell sehr genau einstellen.

Gemäß der Erfindung ist der Öffnungsquerschnitt durch Rotation eines Regelkörpers um eine Regelachse veränderbar. Vorzugsweise kann hierzu der veränderbare Öffnungsquerschnitt mittels eines Oberflächenkanals von variabler Tiefe auf dem Regelkörper realisiert sein. Dieser Oberflächenkanal, der vornehmlich den Milchstrom führen kann, kann vorzugsweise außenumfangsseitig, also insbesondere auf einem Außenumfang des Regelkörpers, ausgestaltet sein.

Ferner kann bei dieser Ausgestaltung vorgesehen sein, dass die die Luft mittels eines ebenfalls auf dem Regelkörper ausgebildeten Luft-Oberflächenkanals zum veränderbaren Öffnungsquerschnitt hingeführt ist. Vorzugsweise mündet dabei der Luft-Oberflächenkanal in den zuvor erläuterten Oberflächenkanal. Mit anderen Worten können somit der Luft-Oberflächenkanal und der (für den Milchstrom vorgesehene) Oberflächenkanal in einer Mündungsstelle zusammengeführt sein. In diesem Fall fließen somit nach dieser Mündungsstelle Luft und Milch gemeinsam durch den besagten Oberflächenkanal. Der veränderbare Öffnungsquerschnitt kann dabei an der Mündungsstelle oder nach der Mündungsstelle in dem Oberflächenkanal ausgebildet sein.

Gemäß einer weiteren, besonders vorteilhaften Ausgestaltung, kann zudem vorgesehen sein, dass der besagte Luftstrom nicht wie üblich aus der Umgebungsluft, sondern aus einer abschaltbaren Luftzufuhr gewonnen wird. Mit anderen Worten kann die Milchaufschäumvorrichtung somit eine Luft-Abschaltvorrichtung aufweisen, mit der der Luftstrom an- und abschaltbar ist.

Wird der Luftstrom mittels der Luft-Abschaltvorrichtung abgeschalten, kann keine Luft mehr in die Mischkammer gelangen, während der Milchstrom weiterhin in die Mischkammer förderbar ist. Somit kann bei abgeschaltetem Luftstrom mit der Milchaufschäumvorrichtung ein reiner Milchstrom gefördert werden. Dieser reine Milchstrom, der keinerlei Luft enthalten kann, kann dabei mit Hilfe der Dampfdüse erwärmt werden. Durch eine solche Ausgestaltung ist es mit der erfindungsgemäßen Milchaufschäumvorrichtung möglich, einen bis zu 80°C heißen Milchstrom zu fördern.

Vorteilhaft ist also, dass die Luftzufuhr beziehungsweise der Luftstrom in die Mischkammer mithilfe der Abschaltvorrichtung ein- und ausschaltbar ist. Dies kann insbesondere automatisch durch eine entsprechende Maschinensteuerung realisiert sein. Beispielsweise kann die Abschaltvorrichtung als ein elektrisch steuerbares Abschaltventil ausgestaltet sein. Dadurch muss keine separate Leitung mehr für die Förderung von heißer Milch vorgesehen werden, sondern aus der Milchaufschäumvorrichtung kann sowohl Milchschaum als auch heiße Milch förderbar sein.

Zur Lösung der genannten Aufgabe sind erfindungsgemäß die Merkmale des unabhängigen Verfahrensanspruchs vorgesehen. Insbesondere wird somit erfindungsgemäß zur Lösung der Aufgabe bei einem Verfahren der eingangs beschriebenen Art vorgeschlagen, dass die Luft durch den veränderbaren Öffnungsquerschnitt in die Mischkammer einströmt.

Mit diesem Verfahren lassen sich alle Vorteile realisieren, die eingangs mit Bezug auf die erfindungsgemäße Vorrichtung erläutert wurden.

Selbstverständlich ist es dabei günstig, wenn in dem erfindungsgemäßen Verfahren eine erfindungsgemäße Milchaufschäumvorrichtung, insbesondere wie zuvor beschrieben und/oder nach einem der auf eine Milchaufschäumvorrichtung gerichteten Ansprüche, verwendet wird.

Das erfindungsgemäße Verfahren kann noch weitere vorteilhafte Merkmale aufweisen.

Dabei kann der Milch-und-Luft-Strom insbesondere durch Einstellen des veränderbaren Öffnungsquerschnitts eingestellt beziehungsweise geregelt werden. Ferner kann im Bereich des veränderbaren Öffnungsquerschnitts der Milchstrom durch den Luftstrom zumindest teilweise begrenzt werden, wie bereits zuvor erläutert wurde.

Durch Einstellen des veränderbaren Öffnungsquerschnitts kann gemäß dem Verfahren sowohl der Luftstrom als auch der Milchstrom eingestellt werden. Dies kann insbesondere gleichzeitig und/oder gleichläufig geschehen, sodass also etwa der Luftstrom automatisch reduziert wird, wenn der Milchstrom reduziert wird und/oder der Luftstrom automatisch erhöht wird, wenn der Milchstrom erhöht wird.

Ferner kann diese Einstellung vorzugsweise unter Verzicht auf eine zusätzliche aktive Regelung des Luftstroms geschehen. Darüber hinaus ist es möglich, dass stets Luft und Milch gemeinsam, gleichzeitig, durch den veränderbaren Öffnungsquerschnitt fließen, vorzugsweise ohne ein Abreißen und/oder Pulsieren des Milchstroms.

Der Dampfstrom kann bevorzugt mittels einer Dampfdüse erzeugt werden. Hierbei kann die Milch und die Luft ausschließlich aufgrund eines von der Dampfdüse der Milchaufschäumvorrichtung auf Basis des Venturi-Effekts erzeugten Unterdrucks, vorzugsweise ohne Unterstützung durch eine Pumpe, in die Mischkammer gefördert werden. Dieses Fördern kann vorzugsweise durch eine gemeinsame Milch-und-Luft-Zuleitung geschehen, die in einer Beimischöffnung für Luft und Milch endet, die ihrerseits in die Mischkammer mündet.

Mittels der Dampfdüse kann ein Unterdruck in der Mischkammer erzeugt werden, der die Milch zusammen mit der Luft aus der gemeinsamen Milch-und-Luft-Zuleitung ansaugt. Die gemeinsame Milch-und-Luft-Zuleitung kann vorzugsweise eine der Mischkammer in Milchströmungsrichtung vorgelagerte Ansaugkammer umfassen, in der der Milch-und-Luft-Strom zu dem Dampfstrom ausgerichtet werden kann, noch bevor der Milch-und-Luft-Strom durch die Beimischöffnung in die Mischkammer eintritt.

Gemäß einer bevorzugten Ausgestaltung des Verfahrens kann die Temperatur des Milchschaums erhöht werden, indem der Milch-und-Luft-Strom durch Verringern des Öffnungsquerschnitts reduziert wird. Hierbei kann insbesondere der Dampfstrom konstant gehalten oder erhöht werden. Ferner kann durch Verringern des Öffnungsquerschnitts sowohl der Luftstrom als auch der Milchstrom reduziert werden.

Schließlich kann der Luftstrom zusätzlich mittels eines Durchflussverminderers vermindert werden. Dies kann insbesondere mit einem Durchflussverminderer in Form einer Lochblende (vgl. die Erläuterungen oben) sowie vorzugsweise in Verbindung mit einer Lippendichtung (vgl. oben) zur Verhinderung eines Milchrückflusses geschehen.

Der Öffnungsquerschnitt kann stufenweise, bevorzugt jedoch kontinuierlich, verändert werden, um so den Milch-und-Luft-Strom stufenweise, bevorzugt jedoch kontinuierlich, einzustellen. Dadurch lässt sich die Temperatur des Milchschaums fein regeln.

Ferner wird der Öffnungsquerschnitt, wie bereits zuvor erläutert wurde, durch Rotation eines Regelkörpers um eine Regelachse verändert. Bevorzugt geschieht dies dadurch, dass eine den Öffnungsquerschnitt bestimmende Tiefe eines Oberflächenkanals auf dem Regelkörper durch Rotation des Regelkörpers verändert wird.

Die Erfindung umfasst darüber hinaus noch weitere innovative Aspekte und betrifft diesbezüglich eine Milchaufschäumvorrichtung mit einer Dampfdüse zur Erzeugung eines Dampfstroms und einer sich an eine Dampfaustrittsöffnung der Dampfdüse anschließenden Mischkammer, wobei die Milch an einem Eintrittsort in die Mischkammer geführt ist. Ferner kann sie in einem Kaffeevollautomaten verwendet werden, um Milch, oder wie zuvor beschrieben Milchschaum, für Kaffeegetränke zu fördern. Die im Folgenden beschriebene Milchaufschäumvorrichtung kann somit verwendet werden, um Milchschaum zu produzieren und zu fördern.

Weitere Ausführungsbeispiele ergeben sich durch Kombination der Merkmale einzelner oder mehrerer Schutzansprüche untereinander Insbesondere können somit Ausbildungen der Erfindung aus der nachfolgenden Beschreibung eines bevorzugten Ausführungsbeispiels in Verbindung mit der allgemeinen Beschreibung, den Ansprüchen sowie den Zeichnungen gewonnen werden.

Es zeigt:
- Fig. 1: eine perspektivische Ansicht einer erfindungsgemäßen Milchaufschäumvorrichtung,
- Fig. 2: eine perspektivische Ansicht auf einen Längsschnitt der Milchaufschäumvorrichtung aus Figur 1,
- Fig. 3: eine Draufsicht auf den Längsschnitt gemäß Figur 2,
- Fig. 4: eine Seitenansicht auf die Milchaufschäumvorrichtung aus Figur 1,
- Fig. 5: eine Aufsicht von oben auf die Milchaufschäumvorrichtung aus Figur 1,
- Fig. 6: eine perspektivische Detailansicht eines partiellen vertikalen Schnitts durch die Milchaufschäumvorrichtung der Figur 1 entlang der in Figur 5 gezeigten Schnittlinie,
- Fig. 7: eine Draufsicht von oben auf einen horizontalen Schnitt durch den Regelkörper in der Stellung gemäß der Figur 6,
- Fig. 8: die Detailansicht aus Figur 6 nach Drehung des Regelkörpers der Milchaufschäumvorrichtung um 90° im Uhrzeigersinn,
- Fig. 9: eine Draufsicht von oben auf einen horizontalen Schnitt durch den Regelkörper in der Stellung gemäß der Figur 8, in Analogie zu Figur 7,
- Fig. 10: eine perspektivische Detailansicht des Regelkörpers der Milchaufschäumvorrichtung aus Figur 1 in der in Figur 1 und Figur 6 gezeigten 0° Position,
- Fig. 11: eine detaillierte Schnittansicht einer Mischkammer der Milchaufschäumvorrichtung der Figur 1 und
- Fig. 12: eine Detailansicht des Regelkörpers der Milchaufschäumvorrichtung aus Figur 1, wobei dieser gerade die Milchzuführung (12) verschließt.

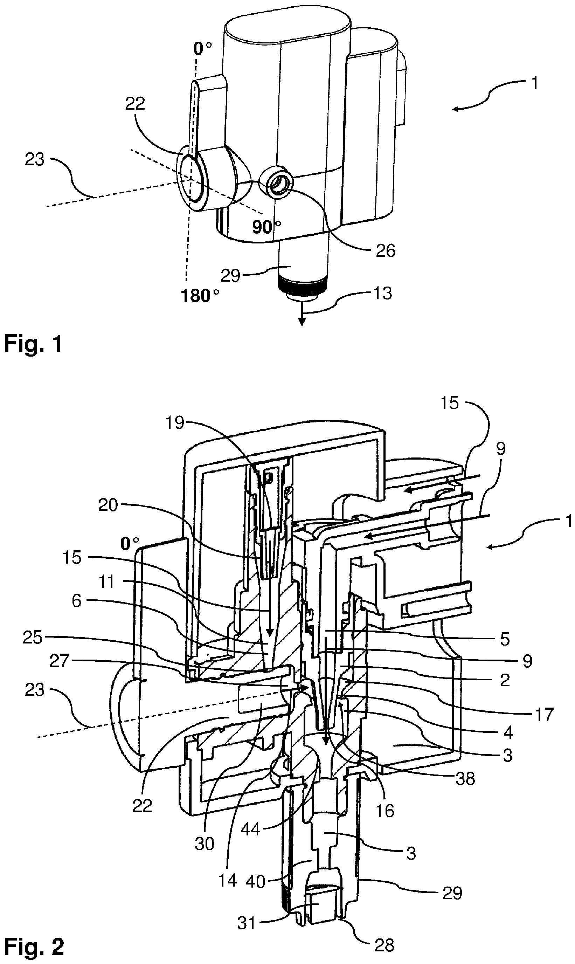

Die Figur 1 zeigt eine im Ganzen mit 1 bezeichnete erfindungsgemäße Milchaufschäumvorrichtung, die zur Verwendung an einem Kaffeevollautomaten vorgesehen ist, mit dem sich verschiedene Kaffee-Getränke bereitstellen lassen.

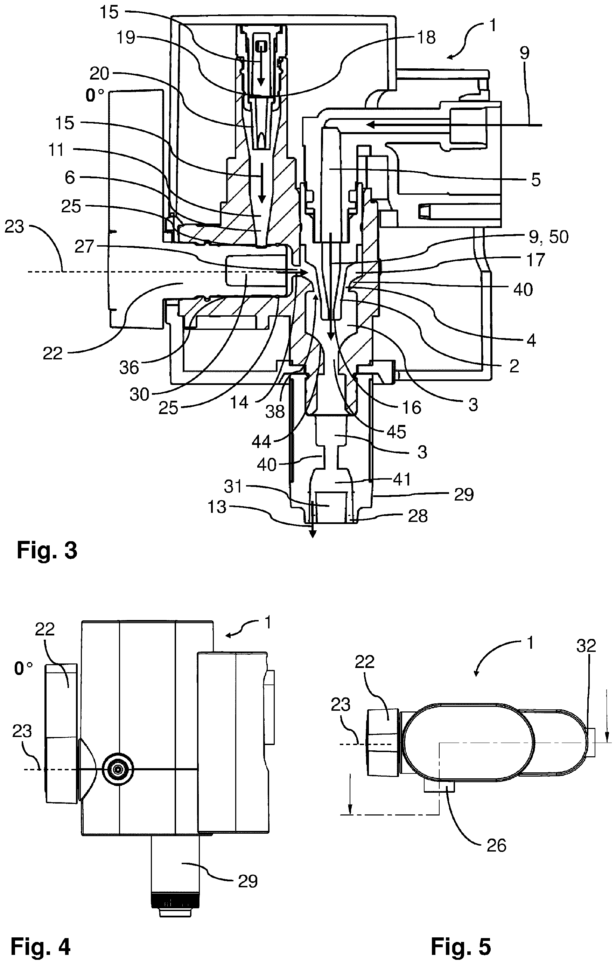

Wie in den Figuren 2 und 3 gut zu erkennen ist, weist die Milchaufschäumvorrichtung 1 eine Dampfdüse 2 auf, mit der ein Dampfstrom 9 erzeugbar ist, der aus einer Dampfaustrittsöffnung 16 austritt und in eine der Dampfdüse 2 nachgelagerte Mischkammer 3 strömt. Zu diesem Zweck ist auch ein Dampfzufuhranschluss 32 vorgesehen von dem Dampf 5 in die Dampfdüse 2 gelangt.

Mithilfe des Dampfstroms 9 kann sowohl Milch 7 als auch Luft 6 in die Mischkammer 3 mit Hilfe des Venturi-Effekts gefördert werden, um dort die Milch 7 und die Luft 6 zu einem stabilen Milchschaum 13 aufzuschäumen. Um die Milchaufschäumvorrichtung 1 konstruktiv einfach zu gestalten, ist dabei auf eine zusätzliche Pumpe verzichtet worden, sodass die Milch 7 und die Luft 6 als ein Milch-und-Luft-Strom 14 ausschließlich aufgrund des mit der Dampfdüse 2 erzeugten Unterdrucks in die Mischkammer 3 gefördert werden.

Zum Aufschäumen der Milch 7 ist in der Mischkammer 3 ein Prallkörper 31 vorgesehen, an welchem es zu einer turbulenten Verwirbelung der Milch 7 und der Luft 6 kommt, sodass feinporiger Milchschaum 13 entsteht, der dann aus einer Milchschaumaustrittsöffnung 28 des in den Figuren 2 und 3 gezeigten Auslaufmoduls 29 strömt.

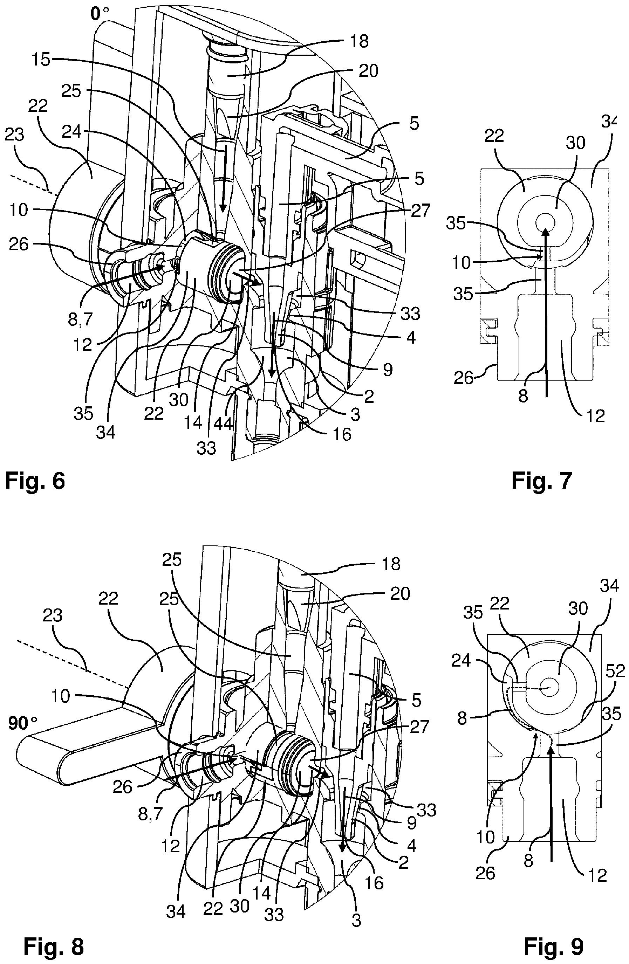

Die Milch 7 wird dabei über einen Milchzufuhranschluss 26 und eine sich daran anschließende Milchzuführung 12, die in Figur 1 zu erkennen ist, der Milchaufschäumvorrichtung 1 zugeführt, sodass ein Milchstrom 8 (Vgl. die Figur 6) in die Mischkammer 3 geführt ist. Ferner ist auch eine entsprechende Luftzuführung 11 vorgesehen, mit der ein Luftstrom 15 in die Mischkammer 3 geführt ist, wobei der Luftstrom 15 aus der Umgebungsluft gewonnen wird, wie anhand der Figuren 2 und 3 zu erkennen ist.

Die Milchaufschäumvorrichtung 1 weist ferner einen Regelkörper 22 auf, der drehbar um eine Regelachse 23 gelagert ist. Mit dem Regelkörper 22 ist ein veränderbarer Öffnungsquerschnitt 10 einstellbar, der eine Durchflussrate des Milchstroms 8 vermindert beziehungsweise einstellt. Wie noch genauer zu erläutern sein wird, kann dabei durch eine Rotation des Regelkörpers 22 eine Flussrate des Milchstroms 8 präzise und kontinuierlich eingestellt werden.

Da die Dampfdüse 2 im Wesentlichen einen konstanten Dampfstrom 9 erzeugt, kann die Temperatur des austretenden Milchschaums 13 mithilfe des Regelkörpers 22 eingestellt werden. Denn sobald die Flussrate des Milchstroms 8 verringert wird, bei im Wesentlichen gleichbleibender Flussrate des Dampfstroms 9, erhöht sich die Temperatur des Milchschaums 13 entsprechend. Dies bedeutet, dass besonders hohe Temperaturen des Milchschaums 13 gerade dann erreicht werden, wenn die Flussrate des Milchstroms 8 am geringsten ist.

Um nun in einer solchen Situation zu verhindern, dass der Milchstrom 8 abreißt und nur noch Luft 6 in die Mischkammer 3 strömt, ist erfindungsgemäß der Luftstrom 15 durch den veränderbaren Öffnungsquerschnitt 10 in die Mischkammer 3 geführt.

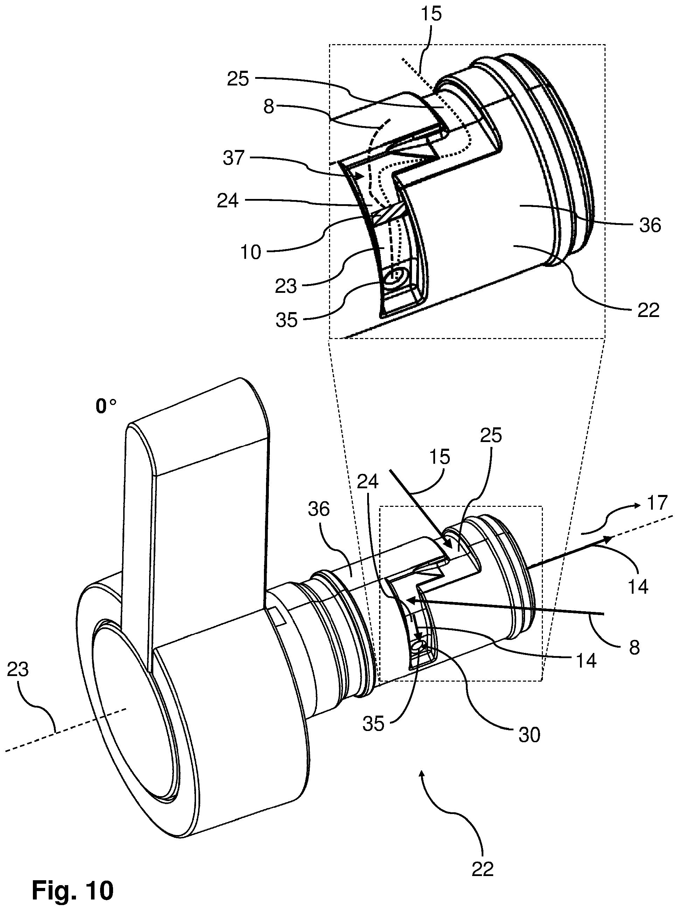

Wie die detaillierte Ansicht des Regelkörpers 22 gemäß der Figur 10 zeigt, weist der Regelkörper 22 dazu einen ersten Oberflächenkanal 24 zur Führung der Milch 7 beziehungsweise des Milchstroms 8 auf sowie einen Luft-Oberflächenkanal 25 zur Führung der Luft 6 beziehungsweise des Luftstroms 15. Diese beiden Oberflächenkanäle 24, 25 sind jeweils außenumfangsseitig in einer Umfangsaußenfläche beziehungsweise in einer Außenkontur 36 des Regelkörpers 22 ausgebildet. Die Umfangsaußenfläche / Außenkontur 36 des Regelkörpers 22 ist dabei zylindrisch ausgebildet, um eine Rotation des Regelkörpers 22 zu ermöglichen, wie die Detailansicht der Figur 10 zeigt.

Anhand der detaillierten Ansichten gemäß den Figuren 6 und 8 ist ersichtlich, dass der Regelkörper 22 abdichtend in einer korrespondierend zu dem Regelkörper 22 ausgebildeten Regelkörperaufnahme 34 gelagert ist. Dabei definiert eine Innenfläche der Regelkörperaufnahme 34 mit dem jeweiligen Oberflächenkanal 24, 25 einen jeweiligen Durchflussquerschnitt, der eine Flussrate des Milchstroms 8 beziehungsweise des Luftstroms 15 mitbestimmt.

Wie die Detailansicht der Figur 10 zeigt, ist eine Kanaltiefe des Oberflächenkanals 24 in Umfangsrichtung veränderlich ausgestaltet. Dabei bestimmt die jeweilige Kanaltiefe des Oberflächenkanals 24 zusammen mit der Regelkörperaufnahme 34 den veränderbaren Öffnungsquerschnitt 10, durch welchen sowohl der Luftstrom 15 als auch der Milchstrom 8 geführt sind, wie anhand der gestrichelten beziehungsweise gepunkteten Linien in der Detailansicht der Figur 10 zu erkennen ist. Zu diesem Zweck mündet der Luft-Oberflächenkanal 25 in den Oberflächenkanal 24, sodass an der in Figur 10 gezeigten Mündungsstelle 37 die Luftzuführung 11 und die Milchzuführung 12 gerade zusammengeführt sind und zwar noch vor dem veränderbaren Öffnungsquerschnitt 10. Mit anderen Worten ist somit die Luft 6 beziehungsweise der Luftstrom 15 mithilfe des Luft-Oberflächenkanals 25 an die Mündungsstelle 37 und von dort zu dem veränderbaren Öffnungsquerschnitt 10 hingeführt.

Mit anderen Worten verändert sich somit die Querschnittsfläche des Öffnungsquerschnitts 10, sobald der Regelkörper 22 rotiert wird. Diese Veränderung geschieht kontinuierlich, sodass der Öffnungsquerschnitt 10 durch Rotation des Regelkörpers 22 kontinuierlich veränderbar ist. Folglich kann dadurch eine Flussrate des Milch-und-Luft-Stroms 14 durch den veränderbaren Öffnungsquerschnitt 10 kontinuierlich verändert werden.

In der in den Figuren 6 und 7 gezeigten 0°-Position des Regelkörpers 22 ist der veränderbare Öffnungsquerschnitt 10 dabei gerade durch eine Durchgangsöffnung 35 bestimmt, die in eine Kammer 30 im Innern des Regelkörpers 22 mündet (Vgl. Figur 7 mit Figur 3). In dieser Position des Regelkörpers 22 strömt somit sowohl der Luftstrom 15 als auch der Milchstrom 8 durch die als variabler Öffnungsquerschnitt 10 fungierende Einströmöffnung 33 in die Kammer 30 und von dort als Milch-und-Luft-Strom 14 durch eine Einströmöffnung 33 in eine Ansaugkammer 17 und von dort durch eine Beimischöffnung 4 in die Mischkammer 3 (Vgl. die Figuren 6 und 8).

In der in den Figuren 8 und 9 gezeigten 90°-Position des Regelkörpers 22 hingegen strömt sowohl der Luftstrom 15 als auch der Milchstrom 8 in dem Oberflächenkanal 24 zunächst entlang des Umfangs des Regelkörpers 22, dann durch den in Figur 10 als schraffierte Fläche illustrierten variablen Öffnungsquerschnitt 10 und erst danach durch die Durchgangsöffnung 35 in die Kammer 30, um von dort in die Ansaugkammer 17 und schließlich in die Mischkammer 3 zu gelangen. In dieser Situation ist also gerade die als schraffierte Fläche in Figur 10 illustrierte Querschnittsfläche für den Durchfluss des Milch-und-Luft-Stroms 14 bestimmend und fungiert daher als variabler Öffnungsquerschnitt 10 im Sinne der Erfindung.

In beiden Situationen (Figur 6 / Figur 8) passiert die Luft 6 zusammen und gleichzeitig mit der Milch 7 den veränderbaren Öffnungsquerschnitt 10 als ein Milch-und-Luft-Strom 14, wobei der eingangs erwähnte Luftstrom 15 und der eingangs erwähnte Milchstrom 8 den Milch-und-Luft-Strom 14 ausbilden.

Wie anhand der Detailansicht der Figur 10 leicht vorstellbar ist, strömen dabei beide Fluide, also die Milch 7 und die Luft 6, nebeneinander durch den variablen Öffnungsquerschnitt 10 und bilden dabei eine gemeinsame fluidische Grenzfläche aus, über die die beiden Fluide miteinander wechselwirken. Dies hat zur Folge, dass im Bereich des veränderbaren Öffnungsquerschnitts 10 der Luftstrom 15 den Milchstrom 8 zumindest teilweise begrenzt. Die restliche Begrenzung wird dabei durch die Wände des Oberflächenkanals 24 geschaffen sowie durch die Innenfläche der Regelkörperaufnahme 34.

Hierbei ist der durch die variable Kanaltiefe des Oberflächenkanals 24 bestimmte veränderbare Öffnungsquerschnitt 10 gerade so dimensioniert, dass eine Einstellung des veränderbaren Öffnungsquerschnitts 10 durch Rotieren des Regelkörpers 22 sowohl den Milchstrom 8 als auch den Luftstrom 15 gleichzeitig und insbesondere gleichläufig einstellt. Dies bedeutet, dass für den Fall, dass durch eine Rotation des Regelkörpers 22 von der in Figur 6 gezeigten 0°-Position in die in Figur 8 gezeigte 90°-Position der veränderbare Öffnungsquerschnitt 10 reduziert wird, sowohl eine Flussrate des Milchstroms 8 als auch gleichzeitig eine Flussrate des Luftstroms 15 reduziert wird. Somit wird also automatisch der Luftstrom 15 gedrosselt, sobald der Milchstrom 8 reduziert wird, beispielsweise um eine hohe Temperatur des austretenden Milchschaums 13 zu erreichen.

Aufgrund der fluidischen Kopplung zwischen dem Milchstrom 8 und dem Luftstrom 15, die durch die gemeinsame fluidische Grenzfläche entsteht, kann es dabei praktisch nicht mehr vorkommen, dass der Milchstrom 8 abreißt.

Die insbesondere in der Längsschnitt-Ansicht der Figur 3 (in Verbindung mit Figur 3) gut zu erkennen ist, ist der veränderbare Öffnungsquerschnitt 10 der Beimischöffnung 4, durch die Luft 6 und Milch 7 die Mischkammer 3 gelangt, gerade vorgelagert in Bezug auf die Strömungsrichtung des Milch-und-Luft-Stroms 14. Ferner ist zu erkennen, dass der Milch-und-Luft-Strom 14 noch vor der Beimischöffnung 4 durch die der Mischkammer 3 vorgelagerte Ansaugkammer 17 geführt ist.

Die Durchgangsöffnung 35, die Kammer 30, die Einströmöffnung 33, die Ansaugkammer 17, und die Beimischöffnung 4 bilden somit eine Milch-und-Luft-Zuleitung 21 aus, die den Milch-und-Luft-Strom 14 von dem veränderbaren Öffnungsquerschnitt 10 ausgehend in die Mischkammer 3 führt.

Wie zum Beispiel in den Figuren 2, 3 und 6 zu erkennen ist, strömt die Luft 6 zunächst durch einen Durchflussverminderer 18 in Form einer Lochblende 19 und danach durch eine Lippendichtung 20. Während die Lochblende 19 eine Flussrate des Luftstroms 15 vermindert dient die Lippendichtung dazu, einen eventuellen Rückfluss der Milch 7 in Richtung der Lochblende 19 zu verhindern.

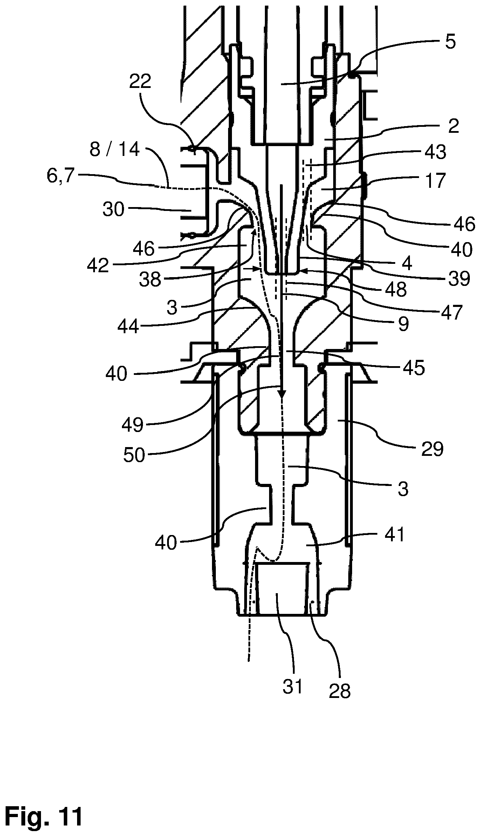

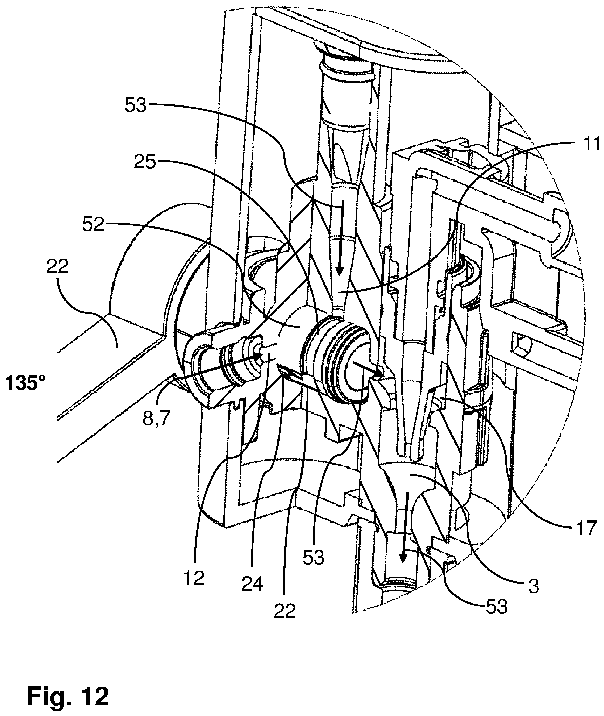

Die Figur 12 illustriert eine weitere Besonderheit des Regelkörpers 22 der Milchaufschäumvorrichtung aus Figur 1. Dieser weist eine Verschlussfläche 52 auf, sodass durch entsprechende Drehung des Regelkörpers 22 in die in Figur 12 illustrierte 135°-Position, die Milchzuführung 12 vollständig verschließbar ist. In dieser Stellung des Regelkörpers 22, das heißt bei vollständigem Verschluss der Milchzuführung 12 (wobei die Milchzuführung 12 wie in Figur 12 zu erkennen ist, gerade zwischen dem (nicht gezeigten) Milchvorrat und dem veränderbaren Öffnungsquerschnitt 10 unterbrochen ist), kann die Luftzuführung 11 weiterhin durchströmt werden. Genauer kann Luft weiterhin zunächst ausgehend von dem Durchflussverminderer 18 durch den Luft-Oberflächenkanal 25 (Vgl. Figur 10) und anschließend durch den (normalerweise auch von der Milch durchströmten) Oberflächenkanal 24 sowie den veränderbaren Öffnungsquerschnitt 10 strömen und so durch die Durchgangsöffnung 35 bis in die Kammer 30 gelangen (Vgl. dazu auch Figur 3 und Fig. 10). Dies wird auch anschaulich klar, wenn man sich vorstellt, den Regelkörper 22 in Figur 9 um weitere 45° im Uhrzeigersinn weiterzudrehen (wodurch die Situation der Figur 11 erreicht wird, bei der der Milchstrom 8 auf die Verschlussfläche 52 trifft und so nicht länger in die Kammer 30 gelangen kann).

Da der Regelkörper 22 in Figur 12 nun also gerade soweit gedreht wurde, dass die Milchzuführung 12 verschlossen, die Luftzuführung 11 aber weiterhin geöffnet ist, kann nun der gesamte untere Abschnitt der Milchzuführung 12 gespült werden ohne dass dabei die Gefahr besteht, dass Spülwasser in den oberen Abschnitt der Milchzuführung 12 und bis in den Milchvorrat gedrückt wird.

Hierzu kann Spülwasser als ein Spülwasserstrom 53 wie in Fig. 12 illustriert in die Luftzuführung 11 eingebracht werden, beispielsweise auf demselben Wege wie die Luft durch den Durchflussverminderer 18 oder über eine separate Zuleitung. Dadurch kann der Spülwasserstrom 53 die Oberflächenkanäle 24 und 25, die Durchgangsöffnung 35 und schließlich die Kammer 30 durströmen, um anschließend durch die Ansaugkammer 17 bis in die Mischkammer 3 zu gelangen und schließlich durch die Milchschaumaustrittsöffnung 28 auszutreten (Vgl. Fig.3). Somit können mindestens alle diejenigen Leitungsabschnitte, die von der Milch und der Luft im Normalbetrieb gemeinsam durchflossen werden mit Spülwasser gereinigt werden, sodass zusätzlich manuell nur noch der obere Abschnitt der Milchzuführung 12 bis zur Verschlussfläche 52 des Regelkörpers 22 gereinigt werden muss, um die Hygiene zu gewährleisten.

Das oben beschriebene Spülen kann dabei vollautomatisch von einem Kaffeevollautomaten durchgeführt werden, der auf einer solchen Milchaufschäumvorrichtung 1 basiert, wobei der Kaffeevollautomat sowohl die aktive Spülung als auch das Verschließen der Milchzuführung 12 steuern kann.

Nicht gezeigt in den Figuren ist eine weitere mögliche Ausgestaltung der Milchaufschäumvorrichtung 1, bei welcher der Luftstrom 15, welcher durch den veränderbaren Öffnungsquerschnitt 10 in die Mischkammer 3 einströmt mittels einer Luft-Abschaltvorrichtung in Form eines elektrisch ansteuerbaren Sperrventils an- beziehungsweise abschaltbar ist. Wird die Luft-Abschaltvorrichtung von dem Kaffeevollautomaten aktiviert, so kann keine Luft 6 mehr in die Mischkammer 3 strömen aber weiterhin kann Milch 7 durch den variablen Öffnungsquerschnitt 10 in die Mischkammer 3 strömen. In diesem Fall fördert die Milchaufschäumvorrichtung 1 durch die in Figur 3 gezeigte Milchschaumaustrittsöffnung 28 des Auslaufmoduls 29 also gerade keinen Milchschaum 13, sondern durch den Dampf 5 erhitzte Milch 7. Bei einer solchen Ausgestaltung kann also mit der Milchaufschäumvorrichtung 1 sowohl Milchschaum 13 als auch heiße Milch 7 ausgegeben werden.

Zusammenfassend hat die Erfindung die Verbesserung der Qualität eines Milchschaums 13 zum Ziel, der mittels einer Milchaufschäumvorrichtung 1 hergestellt wird, die eine Mischkammer 3 aufweist, in welcher mittels eines Dampfstroms 9 Luft 6 und Milch 7 zu dem Milchschaum 13 aufschäumbar sind. Hierzu wird vorgeschlagen, dass eine jeweilige Flussrate eines Luftstroms 15 als auch eines Milchstroms 8, die jeweils in die Mischkammer 3 strömen, dadurch eingestellt wird, dass die Luft 6 und die Milch 7 stets gemeinsam durch einen einstellbaren, variablen Öffnungsquerschnitt 10 in die Mischkammer 3 fließen, der als ein Flussratenverminderer beziehungsweise als eine Drossel für den Luftstrom 15 und den Milchstrom 8 wirkt. Mit anderen Worten ist bei der erfindungsgemäßen Lösung somit ein veränderbarer Öffnungsquerschnitt 10 vorgesehen, durch den ein Luftstrom 15 gemeinsam mit einem Milchstrom 8 geführt ist.

Aus einem anderen Blickwinkel betrachtet, der weitere innovative Aspekte der vorliegenden Erfindung offenbart, zeigt die Figur 1 eine im Ganzen mit 1 bezeichnete erfindungsgemäße Milchaufschäumvorrichtung, die zur Verwendung an einem Kaffeevollautomaten vorgesehen ist, mit dem sich verschiedene Kaffee-Getränke bereitstellen lassen, wobei die Milchaufschäumvorrichtung 1 Milch für die Kaffee-Getränke durch den Kaffeevollautomaten und schließlich bis in eine Tasse befördert.

Wie in Figur 2 zu erkennen ist, weist die Milchaufschäumvorrichtung 1 eine Dampfdüse 2 zur Erzeugung eines Dampfstroms 9 auf sowie eine Mischkammer 3, die sich an eine Dampfaustrittsöffnung 16 der Dampfdüse 2 anschließt. Die geförderte Milch 7 wird dabei als ein Milchstrom 8 entlang des in Figur 11 als eine gestrichelte Linie gezeigten (und mit Bezugszeichen 8 / 14 versehenen) Strömungspfads durch eine Beimischöffnung 4 in die Mischkammer 3 geführt. Die Beimischöffnung 4 mündet dabei in die Mischkammer 3 und definiert somit den Eintrittsort 38.

Wie insbesondere in den Figuren 2 und 11 gut zu erkennen ist, ist der Eintrittsort 38 der Dampfaustrittsöffnung 16 vorgelagert und zwar bezogen auf die Richtung des Dampfstroms 9, die in den Figuren mithilfe eines durch die Dampfaustrittsöffnung 16 verlaufenden geraden Pfeils illustriert ist. Die Vorverlagerung ist dabei derart bemessen, dass der in Figur 2 und noch besser in Figur 11 zu messende (in den Figuren vertikale) Abstand zwischen dem Eintrittsort 38 und der Dampfaustrittsöffnung 16 größer ist als der lichte Durchmesser 47 der Dampfaustrittsöffnung 16, größer als eine lichte Weite 43 der Beimischöffnung 4 und sogar größer als ein Außendurchmesser 48 der Dampfdüse 2 an der Stelle der Dampfaustrittsöffnung 16.

Durch dieses großzügige Vorverlagern des Eintrittsorts bzw. Verlängern der Dampfdüse 2 (jeweils im Vergleich zu vorbekannten Vorrichtungen) wird die in Figur 11 mithilfe der Strichlinie illustrierte Strömungsführung erreicht, bei der die Milch 7 als ein Milchstrom 8 in Richtung des Dampfstroms 9 (vergleiche den Pfeil in Figur 11) an den Dampfstrom 9 herangeführt ist. Wie in Figur 11 zu erkennen ist, strömt dabei der Milchstrom 8 bereits in einem Bereich 42 der Mischkammer 3, der der Dampfaustrittsöffnung 16 vorgelagert ist, in Richtung des Dampfstroms 9. Dies erkennt man insbesondere an der gestrichelten Linie in dem Bereich 42, wo der Milchstrom 8 entlang einer Außenfläche 39 der Dampfdüse 2 strömt.

Genauer ist in der Figur 11, aber noch besser in der Figur 2, zu sehen, dass die Dampfdüse 2 die Beimischöffnung 4 mit begrenzt und somit den Eintrittsort 38 mit definiert. Denn die besagte Beimischöffnung 4 ist ringförmig ausgestaltet und konzentrisch zur Dampfdüse 2 angeordnet, wie man gut in der perspektivischen Ansicht der Figur 2 oder etwa in den Figuren 6 und 8 erkennt.

Der Eintrittsort 38 ist dabei durch eine Verengung 40 gebildet (Vgl. Figur 3), die eine Ansaugkammer 17, welche der Mischkammer 3 in Strömungsrichtung des Milchstroms 8 vorgelagert ist, von der Mischkammer 3 separiert. In die Ansaugkammer 17 strömt der Milchstrom 8 als ein Milch-und-Luft-Strom 14. Mit anderen Worten enthält der Milchstrom 8 somit einen Luftanteil, dessen Zweck weiter unten noch genauer zu erläutern sein wird.

Die Ansaugkammer 17 umgibt die Dampfdüse 2 ringförmig (vergleiche Figur 2 und 6) und bildet eine ebenfalls ringförmig ausgebildete Umlenkfläche 46 aus. Mittels dieser Umlenkfläche 46 wird der zunächst quer in Bezug zum Dampfstrom 9 in die Ansaugkammer 17 einströmende Milchstrom 8 so umgelenkt, dass der Milchstrom 8 die Beimischöffnung 4 bereits in Richtung des Dampfstroms 9 passiert, gut anhand der gestrichelten Linie in Figur 11 zu erkennen ist.

Genauer umströmt der Milchstrom 8 bereits in der Ansaugkammer 17 die Dampfdüse 2 und tritt danach als ein Mantelstrom durch die ringförmig ausgebildete Beimischöffnung 4 in die Mischkammer 3 ein. Danach nähert sich der Milchstrom 8 als ein Mantelstrom dem Dampfstrom 9 kontinuierlich an und hüllt diesen mantelförmig ein, bis er sich mit diesem zu einem Dampf-Milch-Strom 49 vereinigt (Vgl. Figur 11).

Genauer geschieht diese Vereinigung mithilfe eines Fangtrichters 44 (Vgl. Fig. 6 und 11), der in der Mischkammer 3 ausgebildet ist und der die Milch 7 und den Dampf 5 auffängt und vereinigt. Der Fangtrichter 44 verengt sich dabei in Richtung des Dampfstroms 9, wobei er gerade zentrisch zur Dampfaustrittsöffnung 16 ausgerichtet ist (Vgl. Figur 11).

Durch diese weitere Verengung 40 wird die Mischkammer 3 von einer nachgelagerten Zerstäubungskammer 41 separiert wobei gleichzeitig durch die Verengung 40 ein Beschleunigungsabschnitt 45 zum Beschleunigen des Dampf-Milch-Stroms 49 ausgebildet wird (Vgl. Figur 11). Dadurch strömt der Dampf-Milch-Strom 49 in hoher Geschwindigkeit in die nachfolgende Zerstäubungskammer 41 und prallt dort auf einen zentral angeordneten Prallkörper 31, wodurch es zu einer turbulenten Verwirbelung des Dampf-Milch-Stroms 49 und damit zu einem Wärmeübertrag von dem heißen Dampf 5 auf die zu erwärmende Milch 7 kommt.

Im Ergebnis kann die zuvor beschriebene Vorrichtung 1 Milch mit Temperaturen bis zu 80°C aus der Milchaustrittsöffnung 28 fördern (Vgl. Fig. 3), ohne dass es - trotz sehr geringer Förderrate - zu einem Abriss des Milchstroms 8 kommt. Soll Milchschaum mit der Milchaufschäumvorrichtung 1 produziert werden, so fördert die Milchaufschäumvorrichtung 1 einen Milchstrom 8 in die Mischkammer 3, der einen Luftanteil enthält. Wird dieser Milch-und-Luft-Strom 14 mit dem Dampf 5 in der Zerstäubungskammer 41 verwirbelt, so entsteht Milchschaum.

In einem solchen Fall ist es ganz besonders vorteilhaft, wenn die Milchaufschäumvorrichtung 1 einen wie bereits zuvor erläuterten variablen Öffnungsquerschnitt 10 aufweist, durch den ein Luftstrom 14, vorzugsweise gleichzeitig mit dem Milchstrom 8, geleitet werden kann. Denn wie noch genauer zu erläutern sein wird, kann dadurch auch bei geringen Förderraten sichergestellt werden, dass der Milchstrom 8 nicht abreißt, weil der Luftstrom 14 die Oberhand gewinnt.

Zusammenfassend schlägt die Erfindung gemäß einem ersten Aspekt für eine Milchaufschäumvorrichtung 1, die Milch 7 auf Basis des Venturi-Effekts mit Hilfe eines von einer Dampfdüse 2 abgegebenen Dampfstroms 9 fördert, vor, eine Einstellung einer Milchzufuhr mit einer Einstellung einer Luftzufuhr zu koppeln, indem Milch und Luft über einen gemeinsamen, veränderlichen, insbesondere einstellbaren, Öffnungsquerschnitt 10 geleitet werden.

Die Erfindung hat somit die Verbesserung der Qualität eines Milchschaums 13 zum Ziel, der mittels einer Milchaufschäumvorrichtung 1 hergestellt wird, die eine Mischkammer 3 aufweist, in welcher mittels eines Dampfstroms 9 Luft 6 und Milch 7 zu dem Milchschaum 13 aufschäumbar sind. Hierzu wird vorgeschlagen, dass eine jeweilige Flussrate eines Luftstroms 15 als auch eines Milchstroms 8, die jeweils in die Mischkammer 3 strömen, dadurch eingestellt wird, dass die Luft 6 und die Milch 7 stets gemeinsam durch einen einstellbaren, variablen Öffnungsquerschnitt 10 in die Mischkammer 3 fließen, der als ein Flussratenverminderer für den Luftstrom 15 und den Milchstrom 8 wirkt.

Gemäß einem zweiten Aspekt wird vorgeschlagen, durch entsprechende Ausrichtung einer Beimischöffnung 4 und gegebenenfalls unter Zuhilfenahme von Umlenkflächen 46 einen von einem Dampfstrom 9 angesaugten Milchstrom 8 tangential auf den Dampfstrom 9 auffließen zu lassen, um so eine möglichst störungsfreie Förderung des Milchstroms 8 auch bei sehr geringen Flussraten des Milchstroms 8 noch gewährleisten zu können. Zu diesem Zweck wird noch bevor der Milchstrom 8 in Kontakt zu dem Dampfstrom 9 gerät, der Milchstrom 8 in Richtung des Dampfstrom 9 ausgerichtet.

### Bezugszeichenliste

- 1: Milchaufschäumvorrichtung
- 2: Dampfdüse
- 3: Mischkammer
- 4: Beimischöffnung
- 5: Dampf
- 6: Luft
- 7: Milch
- 8: Milchstrom
- 9: Dampfstrom
- 10: veränderbarer Öffnungsquerschnitt
- 11: Luftzuführung
- 12: Milchzuführung
- 13: Milchschaum
- 14: Milch-und-Luft-Strom
- 15: Luftstrom
- 16: Dampfaustrittsöffnung
- 17: Ansaugkammer
- 18: Durchflussverminderer (für 15)
- 19: Lochblende
- 20: Lippendichtung
- 21: Milch-und-Luft-Zuleitung
- 22: Regelkörper
- 23: Regelachse
- 24: Oberflächenkanal (für 7/8)
- 25: Luft-Oberflächenkanal (für 6/15)
- 26: Milchzufuhranschluss
- 27: Milch-und-Luft-Zuleitung
- 28: Milchschaumaustrittsöffnung
- 29: Auslaufmodul
- 30: Kammer
- 31: Prallkörper
- 32: Dampfzufuhranschluss
- 33: Einströmöffnung
- 34: Regelkörperaufnahme
- 35: Durchgangsöffnung
- 36: Außenkontur (von 22)
- 37: Mündungsstelle
- 38: Eintrittsort (für 7 in 3)
- 39: Außenfläche (von 2)
- 40: Verengung
- 41: Zerstäubungskammer
- 42: Bereich (von 3)
- 43: lichte Weite (von 4)
- 44: Fangtrichter
- 45: Beschleunigungsabschnitt
- 46: Umlenkfläche
- 47: lichter Durchmesser (von 16)
- 48: Außendurchmesser (von 2)
- 49: Dampf-und-Milch-Strom
- 50: Milchaufschäumvorrichtung
- 51: Richtung des Dampfstroms
- 52: Verschlussfläche
- 53: Spülwasserstrom

## Patentansprüche

1. **Milchaufschäumvorrichtung** (1), insbesondere zur Verwendung in einem Kaffeevollautomaten, mit einer Dampfdüse (2) und einer sich an die Dampfdüse (2) anschließenden Mischkammer (3) zum Herstellen von Milchschaum (13) aus Dampf (5), Milch (7) und Luft (6),
- wobei ein in die Mischkammer (3) gelangender Milchstrom (8) mittels eines veränderbaren Öffnungsquerschnitts (10) einstellbar ist, und
- wobei die Luft (6) als ein Luftstrom (15) durch den veränderbaren Öffnungsquerschnitt (10) in die Mischkammer (3) geführt ist, und
- wobei eine Milchzuführung (12) und eine Luftzuführung (11) so ausgestaltet sind, dass die Luft (6) gleichzeitig mit der Milch (7) den veränderbaren Öffnungsquerschnitt (10) als ein Milch-und-Luft-Strom (14) passieren kann,
**dadurch gekennzeichnet,**
- **dass** die Milchzuführung (12) zum Ermöglichen einer sicheren Reinigung von unteren Abschnitten der Milchzuführung (12) vollständig mit einem Regelkörper (22) verschließbar ist mit dem sich zudem auch der veränderbare Öffnungsquerschnitt einstellen lässt, wobei der Regelkörper (22) um eine Regelachse (23) drehbar ist, und
- wobei bei vollständigem Verschluss der Milchzuführung (12) die Luftzuführung (11) noch durchströmbar ist.

2. Milchaufschäumvorrichtung (1) gemäß Anspruch 1,
- wobei der Luftstrom (15) und der Milchstrom (8) den Milch-und-Luft-Strom (14) ausbilden und/oder
- wobei im Bereich des veränderbaren Öffnungsquerschnitts (10) der Luftstrom (15) den Milchstrom (8) zumindest teilweise begrenzt, und/oder
- wobei die Milchzuführung (12) derart verschließbar ist, dass die Milchzuführung (12) zwischen einem Milchvorrat und dem veränderbaren Öffnungsquerschnitt (10) unterbrochen ist.

3. Milchaufschäumvorrichtung (1) gemäß einem der vorhergehenden Ansprüche, wobei der veränderbare Öffnungsquerschnitt (10) so dimensioniert ist, dass eine Einstellung des veränderbaren Öffnungsquerschnitts (10) sowohl den Milchstrom (8) als auch den Luftstrom (15), insbesondere gleichzeitig, einstellt.

4. Milchaufschäumvorrichtung (1) gemäß einem der vorhergehenden Ansprüche, wobei der veränderbare Öffnungsquerschnitt (10) einer in die Mischkammer (3) mündenden Beimischöffnung (4) für Luft (6) und Milch (7) vorgelagert ist,
- insbesondere wobei der Milch-und-Luft-Strom (14) durch die Beimischöffnung (4) in die Mischkammer (3) geführt ist.

5. Milchaufschäumvorrichtung (1) gemäß Anspruch 4, wobei der Milch-und-Luft-Strom (14) noch vor der Beimischöffnung (4) durch eine der Mischkammer (3) vorgelagerte Ansaugkammer (17) geführt ist.

6. Milchaufschäumvorrichtung (1) gemäß einem der vorhergehenden Ansprüche, wobei die Dampfdüse (2) so geformt ist, dass ein Dampfstrom (9) erzeugbar ist, der einen Unterdruck auf Basis des Venturi-Effekts verursacht,
- insbesondere derart, dass der Milch-und-Luft-Strom (14), vorzugsweise ohne Unterstützung durch eine zusätzliche Pumpe, mittels des Unterdrucks in die Mischkammer (3) förderbar ist.

7. Milchaufschäumvorrichtung (1) gemäß einem der vorhergehenden Ansprüche, wobei die Milchaufschäumvorrichtung (1) einen zusätzlichen Durchflussverminderer (18) zum Begrenzen des Luftstroms (15), insbesondere in Form einer Lochblende (19), aufweist,
- vorzugsweise in Verbindung mit einer Lippendichtung (20) zur Verhinderung eines Milchrückflusses.

8. Milchaufschäumvorrichtung (1) gemäß einem der vorhergehenden Ansprüche, wobei der Öffnungsquerschnitt (10) zumindest stufenweise bevorzugt jedoch kontinuierlich veränderbar ist,
- vorzugsweise sodass ein Durchfluss des Milch-und-Luft-Stroms (14) durch den veränderbaren Öffnungsquerschnitt (10) zumindest stufenweise, bevorzugt jedoch kontinuierlich, einstellbar ist.

9. Milchaufschäumvorrichtung (1) gemäß einem der vorhergehenden Ansprüche, wobei der Öffnungsquerschnitt (10) durch Rotation des Regelkörpers (22) um eine Regelachse (23) veränderbar ist,
- vorzugsweise wobei hierzu der veränderbare Öffnungsquerschnitt (10) mittels eines, vorzugsweise außenumfangsseitigen, Oberflächenkanals (24) von variabler Tiefe auf dem Regelkörper (22) realisiert ist,
- insbesondere wobei die Luft (6) mittels eines auf dem Regelkörper (22) ausgebildeten, vorzugsweise in den Oberflächenkanal (24) mündenden, Luft-Oberflächenkanals (25) zum veränderbaren Öffnungsquerschnitt (10) hingeführt ist.

10. Milchaufschäumvorrichtung (1) gemäß einem der vorhergehenden Ansprüche, wobei der Luftstrom mittels einer Luft-Abschaltvorrichtung an- und abschaltbar ist,
- insbesondere sodass aus der Milchaufschäumvorrichtung (1) sowohl Milchschaum als auch heiße Milch förderbar ist.

11. **Verfahren zum Erzeugen von Milchschaum** (13) mit Hilfe einer Milchaufschäumvorrichtung (1), insbesondere gemäß einem der vorhergehenden Ansprüche, **und zum sicheren Reinigen von unteren Abschnitten einer Milchzuführung (12)** der Milchaufschäumvorrichtung (1),
- wobei Luft (6) und Milch (7) in einer Mischkammer (3) mittels eines Dampfstroms (9) zu dem Milchschaum (13) aufgeschäumt werden,
- wobei ein in die Mischkammer (3) gelangender Milchstrom (8) mittels eines veränderbaren Öffnungsquerschnitt (10) eingestellt wird,
- wobei die Luft (6) durch den veränderbaren Öffnungsquerschnitt (10) in die Mischkammer (3) einströmen kann,
- und wobei die Luft (6) einen Luftstrom (15) ausbildet, der gleichzeitig mit dem Milchstrom (8) als ein Milch-und-Luft-Strom (14) durch den veränderbaren Öffnungsquerschnitt (10) strömt, **dadurch gekennzeichnet,**
- **dass** die Milchzuführung (12) mit einem Regelkörper (22), mit dem sich der veränderbare Öffnungsquerschnitt (10) einstellen lässt, verschlossen wird, wobei der Regelkörper (22) um eine Regelachse (23) gedreht wird, und
- wobei eine Luftzuführung (11) der Milchaufschäumvorrichtung (1) weiterhin Luft an den Öffnungsquerschnitt (10) heranführen kann, während die Milchzuführung (12) unterbrochen ist, und
- wobei bei vollständigem Verschluss der Milchzuführung (12) die Luftzuführung (11) mit Spülwasser durchströmt wird.

12. Verfahren gemäß Anspruch 11, wobei der Milch-und-Luft-Strom (14) durch Einstellen des veränderbaren Öffnungsquerschnitts (10) eingestellt beziehungsweise geregelt wird.

13. Verfahren gemäß Anspruch 12, wobei durch Einstellen des veränderbaren Öffnungsquerschnitts (10) sowohl der Luftstrom (15) als auch der Milchstrom (8), insbesondere gleichzeitig und/oder gleichläufig, vorzugsweise unter Verzicht auf eine zusätzliche aktive Regelung des Luftstroms (15), eingestellt werden und/oder
- wobei stets Luft (6) und Milch (7) gemeinsam, insbesondere gleichzeitig, durch den veränderbaren Öffnungsquerschnitt (10) fließen, vorzugsweise ohne ein Abreißen und/oder Pulsieren des Milchstroms (8).

14. Verfahren gemäß einem der Ansprüche 11 bis 13, wobei die Temperatur des Milchschaums (13) erhöht wird, in dem der Milch-und-Luft-Strom (14) durch Verringern des Öffnungsquerschnitts (10) reduziert wird,
- insbesondere wobei der Dampfstrom (9) konstant gehalten oder erhöht wird und/oder
- wobei durch Verringern des Öffnungsquerschnitts (10) sowohl der Luftstrom (15) als auch der Milchstrom (8) reduziert werden.

15. Verfahren gemäß einem der Ansprüche 11 bis 14, wobei der Öffnungsquerschnitt (10) durch Rotation des Regelkörpers (22) um eine Regelachse (23) verändert wird,
- vorzugsweise in dem eine den Öffnungsquerschnitt (10) bestimmende Tiefe eines Oberflächenkanals (24) auf dem Regelkörper (22) durch Rotation des Regelkörpers (22) verändert wird.

## Claims

1. **Milk-frothing device** (1), in particular for use in a fully automatic coffee machine, having a steam nozzle (2) and a mixing chamber (3) adjoining the steam nozzle (2) for producing milk froth (13) from steam (5), milk (7) and air (6),
- wherein a milk flow (8) passing into the mixing chamber (3) is adjustable by means of a variable opening cross section (10), and
- wherein the air (6) is guided as an air flow (15) through the variable opening cross section (10) into the mixing chamber (3), and
- wherein a milk supply (12) and an air supply (11) are configured in such a manner that the air (6) simultaneously with the milk (7) can pass through the variable opening cross section (10) as a milk and air flow (14),
**characterized**
- **in that**, in order to permit a reliable cleaning of lower portions of the milk supply (12), the milk supply (12) is completely closeable with a regulating body (22) with which, in addition, the variable opening cross section can also be adjusted, wherein the regulating body (22) is rotatable about a regulating axis (23), and
- wherein, when the milk supply (12) is completely closed, the air supply (11) can still have a flow passing through it.

2. Milk-frothing device (1) according to Claim 1,
- wherein the air flow (15) and the milk flow (8) form the milk and air flow (14), and/or
- wherein, in the region of the variable opening cross section (10), the air flow (15) at least partially delimits the milk flow (8), and/or
- wherein the milk supply (12) is closeable in such a manner that the milk supply (12) between a milk store and the variable opening cross section (10) is interrupted.

3. Milk-frothing device (1) according to either of the preceding claims, wherein the variable opening cross section (10) is dimensioned in such a manner that an adjustment of the variable opening cross section (10) adjusts both the milk flow (8) and the air flow (15), in particular simultaneously.

4. Milk-frothing device (1) according to one of the preceding claims, wherein the variable opening cross section (10) is mounted upstream of an admixing opening (4) for air (6) and milk (7) that opens into the mixing chamber (3),
- in particular wherein the milk and air flow (14) is guided through the admixing opening (4) into the mixing chamber (3).

5. Milk-frothing device (1) according to Claim 4, wherein the milk and air flow (14) is also guided upstream of the admixing opening (4) through an intake chamber (17) which is mounted upstream of the mixing chamber (3).

6. Milk-frothing device (1) according to one of the preceding claims, wherein the steam nozzle (2) is shaped in such a manner that a steam flow (9) can be generated, causing a negative pressure on the basis of the Venturi effect,
- in particular in such a manner that the milk and air flow (14) can be delivered into the mixing chamber (3) by means of the negative pressure, preferably without assistance by an additional pump.

7. Milk-frothing device (1) according to one of the preceding claims, wherein the milk-frothing device (1) has an additional throughflow reducer (18) for limiting the air flow (15), in particular in the form of a pinhole aperture (19),
- preferably in conjunction with a lip seal (20) for preventing a flowback of milk.

8. Milk-frothing device (1) according to one of the preceding claims, wherein the opening cross section (10) can be varied at least in a stepwise manner, but preferably continuously,
- preferably such that a throughflow of the milk and air flow (14) through the variable opening cross section (10) is adjustable at least in a stepwise manner, but preferably continuously.

9. Milk-frothing device (1) according to one of the preceding claims, wherein the opening cross section (10) can be varied by rotation of the regulating body (22) about a regulating axis (23),
- preferably wherein, for this purpose, the variable opening cross section (10) is realized by means of a surface channel (24), preferably on the outer circumferential side and of variable depth, on the regulating body (22),
- in particular wherein the air (6) is guided to the variable opening cross section (10) by means of an air surface channel (25) which is formed on the regulating body (22) and preferably opens into the surface channel (24).

10. Milk-frothing device (1) according to one of the preceding claims, wherein the air flow can be switched on and off by means of an air switching-off device,
- in particular such that both milk froth and hot milk can be delivered from the milk-frothing device (1).

11. **Method for producing milk froth** (13) with the aid of a milk-frothing device (1), in particular according to one of the preceding claims, **and for reliably cleaning lower portions of a milk supply (12)** of the milk-frothing device (1),
- wherein air (6) and milk (7) are frothed in a mixing chamber (3) by means of a steam flow (9) to form the milk froth (13),
- wherein a milk flow (8) passing into the mixing chamber (3) is adjusted by means of a variable opening cross section (10),
- wherein the air (6) can flow through the variable opening cross section (10) into the mixing chamber (3),
- and wherein the air (6) forms an air flow (15) which flows simultaneously with the milk flow (8) as a milk and air flow (14) through the variable opening cross section (10), **characterized**
- **in that** the milk supply (12) is closed with a regulating body (22) with which the variable opening cross section (10) can be adjusted, wherein the regulating body (22) is rotated about a regulating axis (23), and
- wherein an air supply (11) of the milk-frothing device (1) can continue to feed air to the opening cross section (10) while the milk supply (12) is interrupted, and
- wherein, when the milk supply (12) is completely closed, flushing water flows through the air supply (11).

12. Method according to Claim 11, wherein the milk and air flow (14) is adjusted or regulated by adjustment of the variable opening cross section (10).

13. Method according to Claim 12, wherein, by adjustment of the variable opening cross section (10), both the air flow (15) and the milk flow (8) are adjusted, in particular simultaneously and/or synchronously, preferably with an additional active regulation of the air flow (15) being dispensed with, and/or
- wherein air (6) and milk (7) always flow together, in particular simultaneously, through the variable opening cross section (10), preferably without breaking-off and/or pulsating of the milk flow (8).

14. Method according to one of Claims 11 to 13, wherein the temperature of the milk froth (13) is increased by the milk and air flow (14) being reduced by reducing the opening cross section (10),
- in particular wherein the steam flow (9) is kept constant or is increased, and/or
- wherein, by reducing the opening cross section (10), both the air flow (15) and the milk flow (8) are reduced.

15. Method according to one of Claims 11 to 14, wherein the opening cross section (10) is varied by rotation of the regulating body (22) about a regulating axis (23),
- preferably by a depth, which determines the opening cross section (10), of a surface channel (24) on the regulating body (22) being varied by rotation of the regulating body (22).

## Revendications

1. **Dispositif d'émulsion de lait** (1), destiné en particulier à être utilisé dans une cafetière automatique, avec une buse à vapeur (2) et avec une chambre de mélange (3) se raccordant à la buse à vapeur (2) pour fabriquer de la mousse de lait (13) à partir de vapeur (5), de lait (7) et d'air (6),
- dans lequel un flux de lait (8) se produisant dans la chambre de mélange (3) peut être réglé au moyen d'une section d'ouverture variable (10),
- dans lequel l'air (6) est conduit sous la forme d'un flux d'air (15) dans la chambre de mélange (3) à travers la section d'ouverture variable (10), et
dans lequel une arrivée de lait (12) et une arrivée d'air (11) sont conçues de sorte que l'air (6) peut traverser la section d'ouverture variable (10) en même temps que le lait (7) sous la forme d'un flux de lait et d'air (14),
**caractérisé en ce que**
- pour permettre un nettoyage sûr des sections inférieures de l'arrivée de lait (12), l'arrivée de lait (12) peut être complètement fermée à l'aide d'un régulateur (22) avec lequel la section d'ouverture variable peut également être réglée, lequel régulateur (22) peut pivoter autour d'un axe de régulation (23), et
- dans lequel, lorsque l'arrivée de lait (12) est complètement fermée, l'arrivée d'air (11) peut toujours être parcourue.

2. Dispositif d'émulsion de lait (1) selon la revendication 1,
- dans lequel le flux d'air (15) et le flux de lait (8) forment le flux de lait et d'air (14) et/ou
- dans lequel, dans la région de la section d'ouverture variable (10), le flux d'air (15) limite au moins partiellement le flux de lait (8) et/ou
- dans lequel l'arrivée de lait (12) peut être obturée de sorte que l'arrivée de lait (12) est interrompue entre un réservoir de lait et la section d'ouverture variable (10).

3. Dispositif d'émulsion de lait (1) selon une des revendications précédentes, dans lequel la section d'ouverture variable (10) est dimensionnée de sorte qu'un réglage de la section d'ouverture (10) provoque le réglage, en particulier simultané, aussi bien du flux de lait (8) que du flux d'air (15).

4. Dispositif d'émulsion de lait (1) selon une des revendications précédentes, dans lequel la section d'ouverture variable (10) est montée en amont d'une ouverture de mixage (4) pour l'air (6) et le lait (7) débouchant dans la chambre de mélange (3),
- en particulier le flux de lait et d'air (14) étant conduit dans la chambre de mélange (3) à travers l'ouverture de mixage (4).

5. Dispositif d'émulsion de lait (1) selon la revendication 4, dans lequel le flux de lait et d'air (14) est conduit, encore en amont de l'ouverture de mixage (4), à travers une chambre d'aspiration (17) montée en amont de la chambre de mélange (3).

6. Dispositif d'émulsion de lait (1) selon une des revendications précédentes, dans lequel la buse à vapeur (2) est formée de sorte à pouvoir produire un flux de vapeur (9) qui provoque une dépression basée sur l'effet Venturi,
- en particulier de sorte que le flux de lait et d'air (14) peut être transporté, de préférence sans le soutien d'une pompe supplémentaire, au moyen de la dépression dans la chambre de mélange.

7. Dispositif d'émulsion de lait (1) selon une des revendications précédentes, lequel dispositif d'émulsion de lait (1) comporte un réducteur de débit (18) pour limiter le flux d'air (15), en particulier sous la forme d'une plaque perforée (19)
- de préférence en association avec un joint à lèvre (20) pour empêcher un reflux de lait.

8. Dispositif d'émulsion de lait (1) selon une des revendications précédentes, dans lequel la section d'ouverture (10) peut varier au moins par degrés mais de préférence de façon continue,
- de préférence de sorte qu'un débit du flux de lait et d'air (14) peut être réglé au moins par degrés mais de préférence de façon continue à l'aide la section d'ouverture variable (10).

9. Dispositif d'émulsion de lait (1) selon une des revendications précédentes, dans lequel la section d'ouverture (10) peut être modifiée par la rotation du régulateur (22) autour d'un axe de régulation (23),
- la section d'ouverture variable (10) étant pour cela de préférence mise en oeuvre au moyen d'un canal de surface (24) de profondeur variable, de préférence placé sur la périphérie extérieure, sur le régulateur (22),
- l'air étant en particulier amené jusqu'à la section d'ouverture variable (10) au moyen d'un canal de surface d'air (25) formé sur le régulateur (22) et débouchant de préférence dans le canal de surface (24).

10. Dispositif d'émulsion de lait (1) selon une des revendications précédentes, dans lequel le flux d'air peut être allumé et coupé au moyen d'un dispositif de coupure d'air,
- en particulier de sorte qu'aussi bien de la mousse de lait que du lait chaud peuvent être produits par le dispositif d'émulsion de lait (1).

11. **Procédé pour la production de mousse de lait** (13) à l'aide d'un dispositif d'émulsion de lait (1), en particulier selon une des revendications précédentes, **et pour le nettoyage sûr de sections inférieures d'une arrivée de lait (12)** du dispositif d'émulsion de lait (1),
- selon lequel de l'air (6) et du lait (7) sont émulsifiés dans une chambre de mélange (3) au moyen d'un flux de vapeur (9) pour produire la mousse de lait (13),
- selon lequel un flux de lait (8) parvenant dans la chambre de mélange (3) est réglé au moyen d'une section d'ouverture variable (10),
- selon lequel l'air peut affluer à travers la section d'ouverture variable (10) dans la chambre de mélange (3)
- et selon lequel l'air (6) forme un flux d'air (15) qui circule simultanément avec le flux de lait (8), sous la forme d'un flux de lait et d'air (14), à travers la section d'ouverture (10), **caractérisé en ce que**
- l'arrivée de lait (12) est fermée à l'aide d'un régulateur (22) avec lequel la section d'ouverture (10) peut être réglée, lequel régulateur (22) peut pivoter autour d'un axe de régulation (23), et
- selon lequel une arrivée d'air (11) du dispositif d'émulsion de lait (1) peut continuer à envoyer de l'air au niveau de la section d'ouverture variable (10) lorsque l'arrivée de lait (12) est coupée, et
- selon lequel l'arrivée d'air (11) est traversée par de l'eau de rinçage lors de la fermeture complète de l'arrivée de lait (12).

12. Procédé selon la revendication 11, selon lequel le flux de lait et d'air (14) est réglé ou régulé par le réglage de la section d'ouverture variable (10).

13. Procédé selon la revendication 12, selon lequel aussi bien le flux d'air (15) que le flux de lait (8) sont réglés par le réglage de la section d'ouverture variable (10), en particulier simultanément et/ou de façon synchrone, de préférence sans recourir à une régulation active supplémentaire du flux d'air (15) et/ou
- selon lequel de l'air (6) et du lait (7) circulent continuellement ensemble, en particulier simultanément, à travers la section d'ouverture variable (10), de préférence sans interruption et/ou pulsation du flux de lait (8).

14. Procédé selon une des revendications 11 à 13, selon lequel la température de la mousse de lait (13) est augmentée lorsque le flux de lait et d'air (14) est réduit en diminuant la section d'ouverture (10),
- en particulier le flux de vapeur (9) étant maintenu constant ou augmenté et/ou
- aussi bien le flux d'air (15) que le flux de lait (8) étant réduits par la diminution de la section d'ouverture (10).

15. Procédé selon une des revendications 11 à 14, selon lequel la section d'ouverture (10) est modifiée par la rotation du régulateur (22) autour d'un axe de régulation (23),
- de préférence en modifiant par la rotation du régulateur (22) une profondeur d'un canal de surface (24) déterminant la section d'ouverture (10) situé sur le régulateur (22).
